# EUROPEAN PATENT SPECIFICATION

(11) **EP 1 030 551 B1**
(45) Date of publication and mention of the grant of the patent: **03.08.2005**
(21) Application number: 99941888.2
(22) Date of filing: 03.09.1999
(51) Int. Cl.: A01K 1/12, A01J 7/02

(54) **AN IMPLEMENT FOR AUTOMATICALLY MILKING ANIMALS, SUCH AS COWS**
VORRICHTUNG ZUM AUTOMATISCHEN MELKEN VON TIEREN, WIE ZUM BEISPIEL KÜHEN
SYSTEME DE TRAITE AUTOMATIQUE D'ANIMAUX TELS QUE DES VACHES

(30) Priority: 14.09.1998 NL 1010074
(43) Date of publication of application: 30.08.2000
(73) Proprietor: MAASLAND N.V., 3155 PD Maasland (NL)
(72) Inventor: VAN DER LELY, Alexander, NL-3065 NA Rotterdam (NL); VAN DER WEELE, Willem, Abraham, Frans, NL-4614 HC Bergen op Zoom (NL); VAN DEN BERG, Karel, NL-2971 BR Bleskensgraaf (NL); DE GROEN, Franciscus, Johannes, Adrianus, NL-3225 CB Hellevoetsluis (NL)
(74) Representative: Corten, Maurice Jean F.M.
(86) International application number: PCT/NL1999/000550
(87) International publication number: WO 2000/015029

(56) References cited:
- EP-A- 0 191 517
- DE-A- 4 111 880

## Description

The invention relates to an implement for automatically milking animals, such as cows, comprising an automatic milking machine and a milking robot for automatically connecting teat cups to the teats of an animal to be milked, said implement further being provided with a control room in which at least part of the milking machine and/or the milking robot is arranged temporarily or permanently.

Such an implement is known.

With such an implement it is important to work very hygienically. Particularly when an operator or a mechanic comes into contact with part of the milking machine and/or the milking robot, the milking machine and/or the milking robot and/or the milk that may be present therein must be prevented from being contaminated and/or infected.

Therefore, the invention aims at providing an implement enabling a very hygienic way of working.

In accordance with the invention, this is achieved in that the implement is provided with cleaning and/or disinfecting means with the aid of which an operator is cleaned and/or disinfected preferably automatically before coming into contact with part of the milking machine and/or the milking robot in the control room.

According to a further inventive feature, the cleaning and/or disinfecting means are arranged near an entrance door of the control room. In this manner the operator is cleaned and/or disinfected immediately before, during or immediately after entering the control room. According to another embodiment of the invention, the cleaning and/or disinfecting means are arranged in the control room.

In accordance with again another inventive feature, the cleaning and/or disinfecting means comprise a hygienic gateway. According to a further embodiment of the invention, the cleaning and/or disinfecting means comprise a swing door, while cleaning and/or disinfecting means are arranged on, in or near the swing door. In a preferred embodiment of the invention, the cleaning and/or disinfecting means comprise a basin to be waded through, which basin can be filled with a cleaning and/or disinfecting liquid and/or a disinfecting mat for disinfecting the shoes of an operator.

According to another aspect of the invention, the cleaning and/or disinfecting means comprise a mechanical device for cleaning and/or disinfecting shoes or boots. According to a further aspect of the invention, the mechanical cleaning and/or disinfecting device comprises brushes and/or a spraying device.

According to again another embodiment of the invention, the cleaning and/or disinfecting device comprises a radiation source with the aid of which disinfecting radiation, such as UVC-light, is transmitted.

In accordance with an inventive feature, the cleaning and/or disinfecting device comprises a blowing device for cleaning and/or drying the clothes and/or the shoes of the operator by blowing.

According to again another aspect of the invention, the cleaning and/or disinfecting means comprise a high-pressure sprayer and/or an automatically operable cock.

In accordance with a preferred embodiment of the invention, the above described implement is designed as a, preferably movable, container.

The invention will now be explained in further detail with reference to the accompanying drawings.
Figure 1 is a plan view of a first embodiment of the invention, in which the control room with the cleaning and/or disinfecting means accommodated therein, the milking robot and the milking machine are arranged in the middle of the shed;
Figure 2 is a plan view of a second embodiment of the invention, in which the control room with the cleaning and/or disinfecting means accommodated therein, the milking robot and the milking machine are arranged near a side wall of the shed;
Figure 3 is a plan view of a third embodiment of the invention, in which the implement is designed as a container;
Figure 4 is a plan view of a fourth embodiment of the invention, in which the implement is also designed as a container and in which a swing door construction with cleaning and/or disinfecting means included therein is shown as an entrance door to the control room;
Figure 5 is a side view of a swing door construction with cleaning and/or disinfecting means included therein;
Figure 6 shows a fifth embodiment of the invention, in which the implement is provided with two milking robots and a hygienic gateway is arranged near the entrance door to the control room, and
Figure 7 is a plan view of a sixth embodiment of the invention, in which the implement is also provided with two milking robots and the hygienic gateway is arranged between the robots.

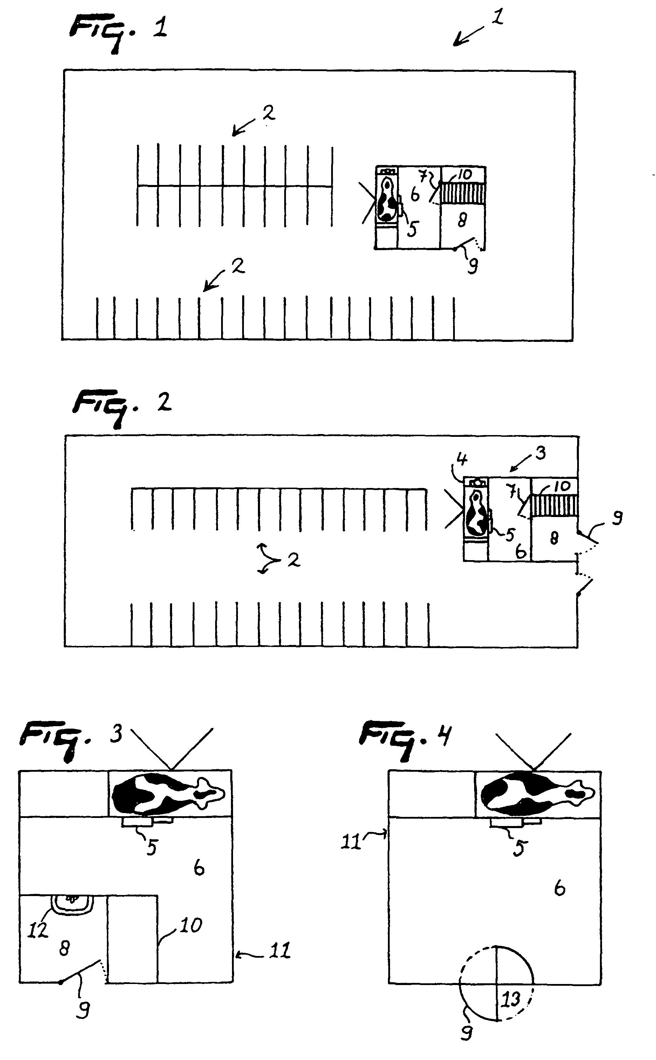

Figure 1 is a plan view of a shed 1 with a number of cubicles 2, in which an implement 3 for automatically milking animals is arranged. The implement 3 for automatically milking animals comprises a milkbox 4 with a milking robot 5 and a (non-shown) automatic milking machine disposed therein. The implement 3 is further provided with a control room 6 surrounded by walls. The control room 6 gives entrance to at least part of the milking robot 5 and at least part of the milking machine. The control room 6 is provided with an entrance door 7. It is possible to enter the entrance door 7 via a hygienic gateway 8. In the present embodiment the hygienic gateway 8 is designed as an extra room surrounded by walls and provided with an entrance door 9. In the hygienic gateway 8, near the entrance door 7 to the control room 6, there is disposed a basin 10 to be waded through, which basin is filled with cleaning and/or disinfecting liquid. The basin 10 to be waded through is disposed over the full width of the hygienic gateway 8. In an alternative embodiment, it is further possible to replace the basin 10 to be waded through by a disinfecting mat. In again another (non-shown) embodiment of the invention, it is further possible to dispose a bench over the full width of the control room, while at one side of the bench the operator leaves his/her contaminated clothes and/or shoes and puts on clean clothes and shoes at the other side of the bench before entering the control room.

Figure 2 shows a second embodiment of the invention, in which the parts of the implement 3 corresponding to those of the first embodiment are indicated by the same reference numerals. The implement 3 according to the second embodiment only differs in that the implement is arranged near a side wall of the shed 1.

Figure 3 is a plan view of a third embodiment of the invention, in which the implement 3 is designed as a possibly movable container 11. In this embodiment, corresponding parts are also indicated by the same reference numerals. In the hygienic gateway 8 there is further disposed a cock 12 which can be automatically put into and out of operation.

Figure 4 shows a fourth embodiment of the invention, in which the implement 3 is also constituted by a container 11, but in which the entrance door 9 to the control room 6 is designed as a swing door and in which the lower side of the swing door comprises a basin 13 which can be filled with the cleaning and/or disinfecting liquid.

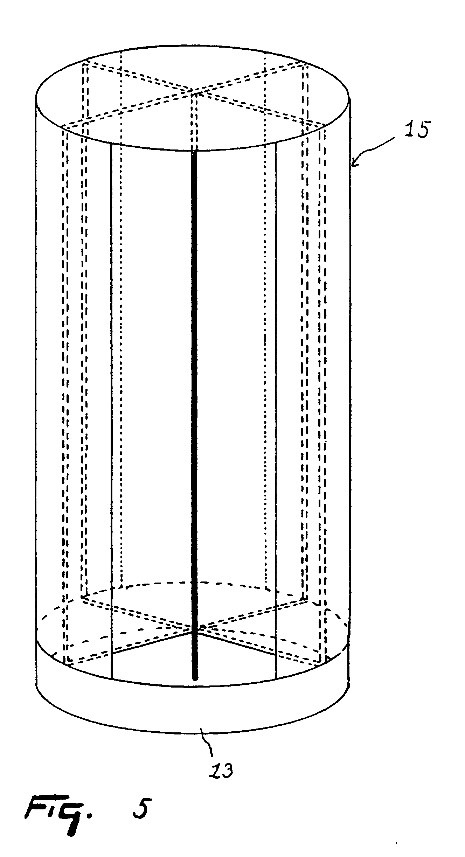

Figure 5 shows a non-integrated swing door construction 14 which, near its lower side, is provided with a basin 13 which can be filled with cleaning and/or disinfecting liquid. An already existing entrance door to the control room can easily be replaced by the swing door construction 14 which is provided with cleaning and/or disinfecting means.

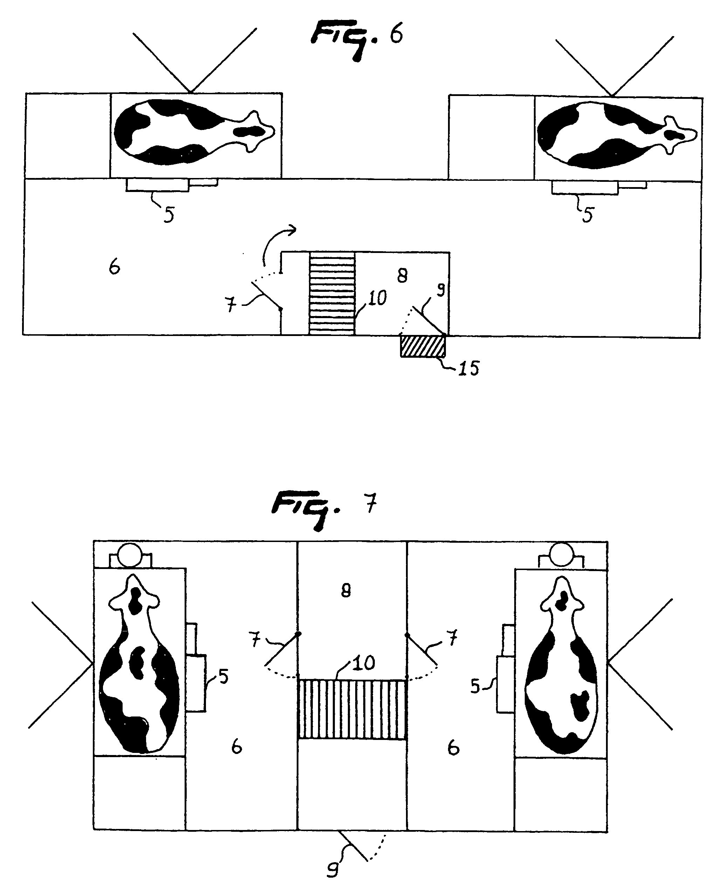

Figures 6 and 7 show a plan view of a fifth and sixth embodiment, respectively, of the invention, in which the implement 3 is provided with two milking robots 5. In the embodiment according to Figure 6, the milking robots 5 are disposed behind each other and for the two milking robots 5 there is one control room 6 to be reached via one hygienic gateway 8. Near the entrance door 9 of the hygienic gateway 8 there is further provided a blowing device 15 by means of which the clothes and/or the shoes of an operator entering the hygienic gateway 8 are cleaned by blowing. Both in Figure 6 and in Figure 7 corresponding parts are indicated by the same reference numerals. In the embodiment of Figure 7 the two milking robots 5 are arranged side by side, while the hygienic gateway 8 is disposed between the two milking robots 5. It is possible to enter the two control rooms 6 from the hygienic gateway 8 via separate entrance doors 7.

## Claims

1. An implement for automatically milking animals, such as cows, comprising an automatic milking machine and a milking robot (5) for automatically connecting teat cups to the teats of an animal to be milked, said implement further being provided with a control room (6) in which at least part of the milking machine and/or the milking robot (5) is arranged temporarily or permanently, **characterized in that** the implement is provided with cleaning and/or disinfecting means (8; 10; 12; 13; 14; 15) with the aid of which an operator is cleaned and disinfected preferably automatically before coming into contact with part of the milking machine and/or the milking robot (5) in the control room (6).

2. An implement as claimed in claim 1, **characterized in that** cleaning and/or disinfecting means (8, 10, 12 - 15) are arranged near an entrance door (7) of the control room (6).

3. An implement as claimed in claim 1 or 2, **characterized in that** the cleaning and/or disinfecting means (8, 10, 12 - 15) are arranged in the control room (6).

4. An implement as claimed in any one of the preceding claims, **characterized in that** the cleaning and/or disinfecting means (8, 10, 12 - 15) comprise a hygienic gateway (8).

5. An implement as claimed in any one of the preceding claims, **characterized in that** the cleaning and/or disinfecting device (8, 10, 12 - 15) comprises a swing door (14), on, in or near which swing door (14) cleaning and/or disinfecting means (8, 10, 12 - 15) are arranged.

6. An implement as claimed in claim 5, **characterized in that** the swing door (14) comprises sensor means with the aid of which the swing door is automatically put into operation when an operator approaches same.

7. An implement as claimed in any one of the preceding claims, **characterized in that** the cleaning and/or disinfecting means (10, 13) comprise a basin (10, 13) to be waded through, which basin can be filled with a cleaning and/or disinfecting liquid and/or a disinfecting mat for disinfecting the shoes of the operator.

8. An implement as claimed in any one of the preceding claims, **characterized in that** the cleaning and/or disinfecting means comprise a mechanical device for cleaning and/or disinfecting shoes or boots.

9. An implement as claimed in claim 8, **characterized in that** the mechanical cleaning and/or disinfecting device comprises a brush and/or a spraying device.

10. An implement as claimed in any one of the preceding claims, **characterized in that** the cleaning and/or disinfecting device comprises a radiation source with the aid of which disinfecting radiation, such as UVC-light, for example, is transmitted.

11. An implement as claimed in any one of the preceding claims, **characterized in that** the cleaning and/or disinfecting device comprises a blowing device (15) for cleaning and/or drying the clothes and/or the shoes of an operator by blowing.

12. An implement as claimed in any one of the preceding claims, **characterized in that** the cleaning and/or disinfecting means comprise a high-pressure sprayer and/or an automatically operable cock (12).

13. An implement as claimed in any one of the preceding claims, **characterized in that** the implement is designed as a, preferably movable, container (11).

## Patentansprüche

1. Vorrichtung zum automatischen Melken von Tieren, wie z. B. Kühen, mit einer automatischen Melkmaschine und einem Melkroboter (5) zum automatischen Anschließen von Zitzenbechern an die Zitzen eines zu melkenden Tieres, wobei die Vorrichtung ferner mit einem Kontrollraum (6) ausgestattet ist, in dem zumindest ein Teil der Melkmaschine und/oder des Melkroboters (5) vorübergehend oder auf Dauer angeordnet ist,
**dadurch gekennzeichnet, daß** die Vorrichtung mit Reinigungs- und/oder Desinfektionsvorrichtungen (8; 10; 12; 13; 14; 15) versehen ist, mit deren Hilfe eine Bedienungsperson vorzugsweise automatisch gereinigt und desinfiziert wird, bevor sie mit einem Teil der Melkmaschine und/oder des Melkroboters (5) in dem Kontrollraum (6) in Kontakt kommt.

2. Vorrichtung nach Anspruch 1,
**dadurch gekennzeichnet, daß** die Reinigungs- und/oder Desinfektionsvorrichtungen (8, 10, 12 bis 15) nahe einer Eingangstür (7) des Kontrollraumes (6) angeordnet sind.

3. Vorrichtung nach Anspruch 1 oder 2,
**dadurch gekennzeichnet, daß** die Reinigungs- und/oder Desinfektionsvorrichtungen (8, 10, 12 bis 15) in dem Kontrollraum (6) angeordnet sind.

4. Vorrichtung nach einem der vorhergehenden Ansprüche,
**dadurch gekennzeichnet, daß** die Reinigungs- und/oder Desinfektionsvorrichtungen (8, 10, 12 bis 15) einen Hygienegang (8) umfassen.

5. Vorrichtung nach einem der vorhergehenden Ansprüche,
**dadurch gekennzeichnet, daß** die Reinigungs- und/oder Desinfektionsvorrichtungen (8, 10, 12 bis 15) eine Drehtür (14) umfassen, wobei an, in oder nahe der Drehtür (14) Reinigungs- und/oder Desinfektionsvorrichtungen (8, 10, 12 bis 15) angeordnet sind.

6. Vorrichtung nach Anspruch 5,
**dadurch gekennzeichnet, daß** die Drehtür (14) eine Sensorvorrichtung umfaßt, mittels der die Drehtür automatisch in Betrieb gesetzt wird, wenn sich ihr eine Bedienungsperson nähert.

7. Vorrichtung nach einem der vorhergehenden Ansprüche,
**dadurch gekennzeichnet, daß** die Reinigungs- und/oder Desinfektionsvorrichtungen (10, 13) ein zu durchlaufendes Becken (10, 13) umfassen, wobei das Becken mit einer Reinigungs- und/oder Desinfektionsflüssigkeit und/oder einer Desinfektionsmatte zum Desinfizieren der Schuhe der Bedienungsperson gefüllt sein kann.

8. Vorrichtung nach einem der vorhergehenden Ansprüche,
**dadurch gekennzeichnet, daß** die Reinigungs- und/oder Desinfektionsvorrichtungen eine mechanische Vorrichtung zum Reinigen und/oder Desinfizieren von Schuhen oder Stiefeln umfassen.

9. Vorrichtung nach Anspruch 8,
**dadurch gekennzeichnet, daß** die mechanische Reinigungs- und/oder Desinfektionsvorrichtung eine Bürste und/oder eine Sprühvorrichtung umfaßt.

10. Vorrichtung nach einem der vorhergehenden Ansprüche,
**dadurch gekennzeichnet, daß** die Reinigungs- und/oder Desinfektionsvorrichtung eine Strahlungsquelle umfaßt, mittels der eine desinfizierende Strahlung, wie z. B. UV-C-Licht, gesendet wird.

11. Vorrichtung nach einem der vorhergehenden Ansprüche,
**dadurch gekennzeichnet, daß** die Reinigungs- und/oder Desinfektionsvorrichtung eine Blasvorrichtung (15) zum Reinigen und/oder Trocknen der Kleider und/oder der Schuhe einer Bedienungsperson durch Blasen umfaßt.

12. Vorrichtung nach einem der vorhergehenden Ansprüche,
**dadurch gekennzeichnet, daß** die Reinigungs- und/oder Desinfektionsvorrichtungen ein Hochdruck-Sprühgerät und/oder einen automatisch zu betätigenden Hahn (12) umfassen.

13. Vorrichtung nach einem der vorhergehenden Ansprüche,
**dadurch gekennzeichnet, daß** die Vorrichtung als vorzugsweise bewegbarer Behälter (11) ausgeführt ist.

## Revendications

1. Système de traite automatique d'animaux, tels que des vaches, comprenant une machine à traire automatique et un robot de traite (5) servant à relier automatiquement des gobelets trayeurs aux trayons d'un animal à traire, ledit système étant en outre équipé d'une salle de commande (6) dans laquelle au moins une partie de la machine à traire et/ou du robot de traite (5) est disposée de manière temporaire ou permanente, **caractérisé en ce que** le système est équipé de moyens de nettoyage et/ou de désinfection (8 ; 10 ; 12 ; 13 ; 14 ; 15) à l'aide desquels un opérateur est nettoyé et désinfecté de préférence automatiquement avant de venir en contact avec la partie de la machine à traire et/ou du robot de traite (5) dans la salle de commande (6).

2. Système selon la revendication 1, **caractérisé en ce que** les moyens de nettoyage et/ou de désinfection (8, 10, 12 à 15) sont disposés à proximité d'une porte d'entrée (7) de la salle de commande (6).

3. Système selon la revendication 1 ou 2, **caractérisé en ce que** les moyens de nettoyage et/ou de désinfection (8, 10, 12 à 15) sont disposés dans la salle de commande (6).

4. Système selon l'une quelconque des revendications précédentes, **caractérisé en ce que** les moyens de nettoyage et/ou de désinfection (8, 10, 12 à 15) comprennent une porte hygiénique (8).

5. Système selon l'une quelconque des revendications précédentes, **caractérisé en ce que** le dispositif de nettoyage et/ou de désinfection (8, 10, 12 à 15) comprend une porte battante (14), sur, dans, ou à proximité de laquelle porte battante (14) sont disposés les moyens de nettoyage et/ou de désinfection (8, 10, 12 à 15).

6. Système selon la revendication 5, **caractérisé en ce que** la porte battante (14) comprend des moyens de détection à l'aide desquels la porte battante est automatiquement actionnée lorsqu'un opérateur approche de celle-ci.

7. Système selon l'une quelconque des revendications précédentes, **caractérisé en ce que** les moyens de nettoyage et/ou de désinfection (10, 13) comprennent un bassin (10, 13) qui doit être traversé, lequel bassin peut être rempli d'un liquide de nettoyage et/ou de désinfection et/ou d'un tapis de désinfection servant à désinfecter les chaussures de l'opérateur.

8. Système selon l'une quelconque des revendications précédentes, **caractérisé en ce que** les moyens de nettoyage et/ou de désinfection comprennent un dispositif mécanique servant à nettoyer et/ou à désinfecter des chaussures ou des bottes.

9. Système selon la revendication 8, **caractérisé en ce que** le dispositif mécanique de nettoyage et/ou de désinfection comprend une brosse et/ou un dispositif de pulvérisation.

10. Système selon l'une quelconque des revendications précédentes, **caractérisé en ce que** le dispositif de nettoyage et/ou de désinfection comprend une source de rayonnement à l'aide de laquelle est émis un rayonnement de désinfection, tel que des rayons ultraviolets C, par exemple.

11. Système selon l'une quelconque des revendications précédentes, **caractérisé en ce que** le dispositif de nettoyage et/ou de désinfection comprend un dispositif de soufflage (15) destiné à nettoyer et/ou à sécher les vêtements et/ou les chaussures d'un opérateur par soufflage.

12. Système selon l'une quelconque des revendications précédentes, **caractérisé en ce que** les moyens de nettoyage et/ou de désinfection comprennent un pulvérisateur haute pression et/ou un robinet (12) pouvant être actionné automatiquement.

13. Système selon l'une quelconque des revendications précédentes, **caractérisé en ce que** le système est conçu en tant que conteneur (11) de préférence mobile.
